# EUROPEAN PATENT APPLICATION

(11) **EP 4 614 672 A1**
(43) Date of publication of application: **10.09.2025**
(21) Application number: 24305358.4
(22) Date of filing: 08.03.2024
(51) Int. Cl.: H01M 10/52

(54) **A DEVICE FOR REDUCING CO2 AND H2O, IN PARTICULAR IN A PRISMATIC BATTERY CELL**

(71) Applicant: Automotive Cells Company SE, 33520 Bruges (FR)
(72) Inventor: LEE, Seung Young (Bruce), 40229 DUESSELDORF (DE)
(74) Representative: Lavoix

(57) **Abstract**

The device (1) for reducing CO₂ and H₂O, in particular in a prismatic battery cell, comprises a bag (6) permeable to CO₂ and H₂O, the bag (6) being filled with a CO₂/H₂O absorbing material (11) made from a mixture of a metal salt intended to react with CO₂ and of a super water absorbent intended to absorb H₂0.

## Description

The invention relates to a device for reducing CO₂ and H₂O, in particular in a prismatic battery cell.

A prismatic battery cell comprises electrodes and it is usually filled with an electrolyte to facilitate ionic conductivity among electrodes. Such an electrolyte is usually subject to chemical reactions that may produce CO₂. However, the emission of CO₂ is not desirable.

Besides, it case of humidity in the cell, the presence of H₂O may lead to rapid performance degradation and gas evolution within the cell. Indeed, the electrolyte are usually vulnerable to undesired moisture contact during battery manufacturing. Moisture may become trapped in the cell can and react with the electrolyte, causing electrolyte degradation and the generation of aggressive fluoride ions and CO₂ gas. Overall, this inadvertent contact with moisture results in cell performance degradation.

Thus, because of these reasons, there is a need to reduce CO₂ and H₂O in a prismatic battery cell.

A device for absorbing CO₂ is already known from prior art, in particular from the Scientific reports (Daigle, Jean-Christophe & Asakawa, Yuichiro & Perea, Alexis & Dontigny, Martin & Zaghib, Karim. 2020. Novel polymer coating for chemically absorbing CO2 for safe Li-ion battery. Scientific Reports. 10. 10305. 10.1038/s41598-020-67123-1). The author introduced a paper-sheet-like absorber in the battery cell, but a notable drawback of this device is that it is not able to accommodate water molecules produced by CO₂ absorption.

The invention is intended to solve this problem by providing a device able to reduce both CO₂ and H₂O, in particular usable in a battery cell.

To this end, the invention relates to a device for reducing CO₂ and H₂O, in particular in a prismatic battery cell, characterized in that it comprises a bag permeable to CO₂ and H₂O, the bag being filled with a CO₂/H₂O absorbing material made from a mixture of a metal salt intended to react with CO₂ and of a super water absorbent intended to absorb H₂0.

The bag is constructed from sheets of material that permit CO₂ penetration into the bag, facilitating contact with CO₂ absorbent and water absorbent materials. Any CO₂ and water present in the cell that comes into contact with the absorbent material is absorbed from the cell.

A device of the invention may comprise any of the following features, taken in combination or in any possible combination.
- The bag is made of a laminate, comprising an outer layer made of Tyvek^{™}.
- The laminate comprises a first intermediate layer of Ethylene Vinyl Acetate, a second intermediate layer of low-density polyethylene, and an inner layer made of a water and grease-resistant paper.
- The bag is formed by folding a piece of laminate over a fold, and closing the bag by forming seams.
- The metal salt comprises Lithium hydroxyde (LiOH) and Calcium hydroxide (CaOH).
- The salt comprises calcium oxide, calcium dehydroxide, potassium hydroxide, sodium carbonates, and/or potassium carbonate.
- The super water absorbent comprises a super absorber polymer (SAP).
- The super water absorbent includes sodium polyacrylate, polyacrylamide (PAM), polyvinyl alcohol (PVA), polyethylenoxide (PEO), Carboxymethyl Cellulose (CMC), starch-grafted polyacrylonitrile (starch-g-PAN), cross-linked poly(acrylic acid), Hydrolyzed polyacrylonitrile (HPAN), and/or polysodium acrylate.
- The weight percentage of metal salt is about 95% and the weight percentage of super water absorber is preferably around 5%.

The invention also related to a battery cell, comprising a can, characterized in that the can houses a device as defined above.

Several aspects and advantages of the invention will be enlightened in the following disclosure, given only as a non-limitative example and made in reference to attached figures, in which:
- Figure 1 is a perspective view of a device for reducing CO₂ and H₂O according to an example of embodiment of the invention;
- Figure 2 is a cross-sectional view of the device of Figure 1;
- Figure 3 schematically shows a cross-sectional view of a trilaminated packaging fiber/polymer forming a bag of the device of Figure 1.

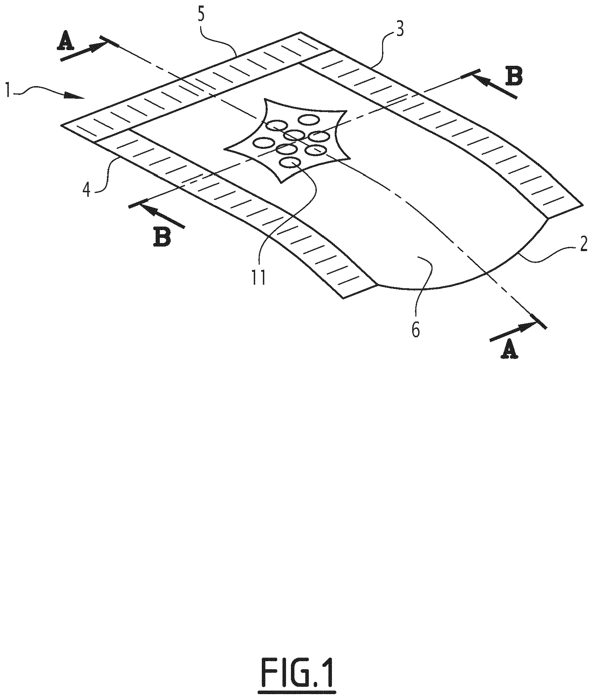

Figure 1 shows a device 1 for reducing CO₂ and H₂O. The device 1 is, for example, intended to be arranged in a battery cell. In particular, the battery cell usually comprises a can, housing electrodes and filed by an electrolyte. The device 1 is intended to be housed in the can.

The device 1 comprises a bag 6 filled with a CO₂/H₂O-absorbing material 11.

The bag 6 is formed in at least one inert material, inert with respect to the electrolyte filling the battery cell.

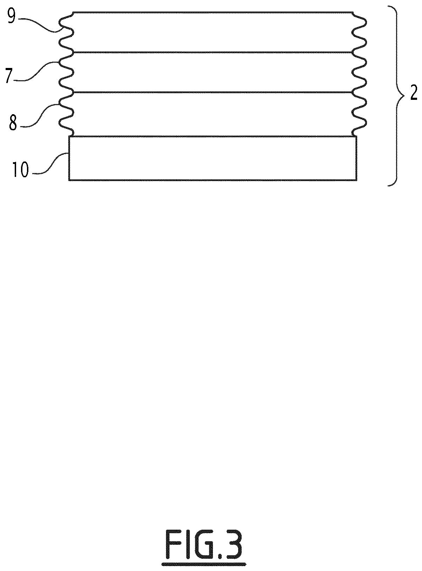

Figure 3 illustrates a preferred material for constructing bag 6. This material comprises a laminate 2, incorporating various layers to optimize functionality.

The components of the laminate 2 include, for example, a first intermediate layer 7 of EVA (ethylene vinyl acetate), preferentially measuring 15 - 30 microns in thickness and featuring 300,000 holes per square meter.

The laminate 2 also includes a second intermediate layer 8 of low-density polyethylene, preferentially also 15 - 30 microns thick. The second intermediate layer 8 is arranged adjacent to the first intermediate layer 7.

The laminate 2 also comprises an outer layer 9, made of Tyvek^{™}. The outer layer 9 is arranged adjacent to the first intermediate layer 7. The first intermediate layer 7 is arranged between the second intermediate layer 8 and the outer layer 9. The outer layer 9 is arranged on the outer side of the bag 6.

The laminate 2 also comprises an inner layer 10, arranged adjacent to the second intermediate layer 8, on the inner side of the bag 6. The inner layer 10 is a water and grease-resistant paper.

The outer Tyvek layer 9, being water-resistant, allows restricting material migration in and out of the bag 6. It also serves as a barrier against staining caused by external elements like electrolytes.

Layers 7, 8, 9, 10 are seamlessly integrated into the laminate 2 using appropriate heat and pressure. The laminate 2 allows mitigating water migration out of the bag 6. By effectively retaining water within, the bag 6 facilitates the passage of CO₂. Consequently, during cell cycling and calendaring aging, the bag 6 remains a reservoir for a balanced mixture of CO₂ and H₂O.

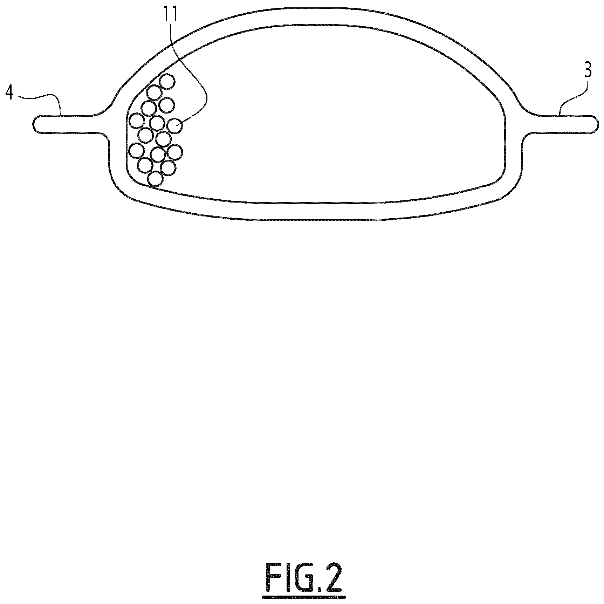

The resulting bag 6, derived from laminate 2 and depicted in FIGS. 1 and 2, is formed by folding a piece of laminate 2 over a fold. The bag 6 is closed by forming seams 3, 4, and 5, established through heat and pressure, with the inner layer 10 sealing to itself. This process ensures the containment of the CO₂/H₂O-absorbing material 11 within bag 6. The final sealing of seams 3, 4, or 5, conducted under a nitrogen gas environment, guarantees the preservation of the composition's efficacy within the bag 6.

It should be noticed that the dimensions of the bag 6 could be chosen as a function of the desired application.

In the shown example, the bag 6 only comprises one compartment, but it can, in a variant, comprising several compartments, in particular made by seams delimiting the compartments. The quantity of absorbent material in each compartment can be gauged to ensure that upon CO₂ and water absorption, the compartment undergoes swelling, providing a visual indicator of CO₂ and water presence
The CO₂/H₂O -absorbing material 11 is made of a composition of a metal salt and a super water absorbent.

Preferentially, the metal salt comprises Lithium hydroxyde (LiOH) and Calcium hydroxide (CaOH).

A pivotal aspect of the absorbing material 11 lies in the utilization of a combination of a super water absorber and a CO₂ absorbent.

The synergistic reaction of LiOH and CaOH, coupled with the super water absorbent, responds to moisture activated by CO₂. This carefully formulated composition is primed for utilization in environments characterized by dry conditions. The packaging approach involves enclosing the composition within the bag 6, strategically inhibiting moisture migration and safeguarding it for the subsequent CO2 and H2O absorption reaction.

Preferentially, the super water absorbent comprises a super absorber polymer (SAP).

It is reminded that a superabsorbent polymer (SAP) is a water-absorbing hydrophilic homopolymers or copolymers that can absorb and retain extremely large amounts of a liquid relative to its own mass. The superabsorbent polymers is usually made from the polymerization of acrylic acid blended with sodium hydroxide in the presence of an initiator to form a poly-acrylic acid sodium salt (sometimes referred to as sodium polyacrylate).

Preferentially, the weight percentage of metal salt is about 95% and the weight percentage of super water absorber is preferably around 5%. The concentration of super water absorber is calibrated to ensure sufficient proximity to the salt, allowing all segments of the super water absorber to engage with the water formed by the salt.

Preferentially, The salt's mesh size ranges from about 48 mesh to 325 mesh.

More particularly, the mesh size of the absorbing material is between approximately 50 mesh and 325 mesh. More specifically, the preferred range is between about 100 mesh and 325 mesh, with the most optimal size being approximately 200 mesh.

We remind that a mesh is a measurement of particle size often used in determining the particle-size distribution of a granular material. There is a known correspondence between the mesh and size of the openings of a sieve letting the particles pass, which can be found in the following table:

| | | | | | |
|---|---|---|---|---|---|
| Mesh | 45 | 50 | 100 | 200 | 325 |
| Opening (µm) | 355 | 300 | 150 | 75 | 44 |

In a variant, the salt comprises calcium oxide, calcium dehydroxide, potassium hydroxide, sodium carbonates, and/or potassium carbonate.

In a variant, the super water absorbent includes sodium polyacrylate, polyacrylamide (PAM), polyvinyl alcohol (PVA), polyethylenoxide (PEO), Carboxymethyl Cellulose (CMC), starch-grafted polyacrylonitrile (starch-g-PAN), cross-linked poly(acrylic acid), Hydrolyzed polyacrylonitrile (HPAN), and/or polysodium acrylate.

The absorption dynamics will now be disclosed.

The salt functions as a moisture supplier, readily releasing moisture in CO₂-rich environments. In contrast, the super water absorber typically initiates moisture absorption from the environment. In highly CO₂-rich settings, super water absorber can effectively absorb moisture due to the abundance of moisture available. The salt holds a dual advantage: it can react with CO₂ under 1 bar, with enhanced reactivity under high CO₂ pressure in applications like battery cans, and its powder-like flowability post-CO₂ adsorption, coupled with released moisture, facilitates direct capture by the super water absorber. This characteristic proves advantageous from a manufacturing perspective, ensuring smooth flow into the bag, whether standalone or in a mixture with particulate super water absorber.

The CO₂/H₂O absorbing material 11, tailored for CO2-rich environments, is enclosed in the bag 6 which is moisture and CO₂ permeable. This design allows CO₂ to pass through while resisting water migration, ensuring that water remains confined for interaction with the super water absorber instead of dispersing into the environment. The bag 6 housing the CO₂/H₂O-absorbing material 11 takes the form of a packet strategically positioned within the battery cell can. This arrangement ensures optimal functionality in diverse environments, maintaining an internal balance between CO₂ and moisture levels.

Advantages of the present invention will now be disclosed.

The device 1 allows a direct capture of airborne moisture and CO₂:
- Airborne moisture and CO₂ are captured directly as they enter the packaging bag 6 from all sides;
- The absorbents 11 within the bag 6 come into contact with moisture and CO₂, facilitating their reaction; and
- The presence of the super water absorbent alongside the CO₂ absorbent ensures effective capture of H₂O after its reaction with CO₂.

The device 1 also allows protection and accommodation by the packaging bag 6:
- The packaging bag 6 acts as a protective barrier, shielding the absorbents 11 from direct exposure to the electrolyte;
- The bag 6 accommodates both the absorbents 11 and the products formed after gas absorption;
- The bag 6 seamlessly fits into the venting area environment, preventing water from escaping even in the event of overturning and avoiding any mechanical contact with cell components.

## Claims

1. A device (1) for reducing CO₂ and H₂O, in particular in a prismatic battery cell, **characterized in that** it comprises a bag (6) permeable to CO₂ and H₂O, the bag (6) being filled with a CO₂/H₂O absorbing material (11) made from a mixture of a metal salt intended to react with CO₂ and of a super water absorbent intended to absorb H₂0.

2. The device (1) according to claim 1, wherein the bag (6) is made of a laminate (2), comprising an outer layer (9) made of Tyvek^{™}.

3. The device (1) according to claim 2, wherein the laminate (2) comprises a first intermediate layer (7) of Ethylene Vinyl Acetate, a second intermediate layer (8) of low-density polyethylene, and an inner layer (10) made of a water and grease-resistant paper.

4. The device (1) according to any of claim 2 or 3, wherein the bag (6) is formed by folding a piece of laminate (2) over a fold, and closing the bag (6) by forming seams (3, 4, and 5).

5. The device (1) according to any of preceding claims, wherein the metal salt comprises Lithium hydroxyde (LiOH) and Calcium hydroxide (CaOH).

6. The device (1) according to any of preceding claims, wherein the salt comprises calcium oxide, calcium dehydroxide, potassium hydroxide, sodium carbonates, and/or potassium carbonate.

7. The device (1) according to any of preceding claims, wherein the super water absorbent comprises a super absorber polymer (SAP).

8. The device (1) according to any of preceding claims, wherein the super water absorbent includes sodium polyacrylate, polyacrylamide (PAM), polyvinyl alcohol (PVA), polyethylenoxide (PEO), Carboxymethyl Cellulose (CMC), starch-grafted polyacrylonitrile (starch-g-PAN), cross-linked poly(acrylic acid), Hydrolyzed polyacrylonitrile (HPAN), and/or polysodium acrylate.

9. The device (1) according to any of preceding claims, wherein the weight percentage of metal salt is about 95% and the weight percentage of super water absorber is preferably around 5%.

10. A battery cell, comprising a can, **characterized in that** the can houses a device (1) according to any of preceding claims.
